# EUROPEAN PATENT SPECIFICATION

(11) **EP 4 228 968 B1**
(45) Date of publication and mention of the grant of the patent: **03.04.2024**
(21) Application number: 22721127.3
(22) Date of filing: 21.04.2022
(51) Int. Cl.: B64D 27/26, B64D 7/04, B64D 27/18, B64D 7/00

(54) **ASSEMBLY FOR MOUNTING AN UNDERWING PYLON TO A RIB OF AN AIRCRAFT WING**
ANORDNUNG ZUR MONTAGE EINES UNTERFLÜGELPYLONS AN EINER RIPPE EINES FLUGZEUGFLÜGELS
ENSEMBLE SERVANT À MONTER UN MÂT D'INTRADOS SUR UNE NERVURE D'UNE AILE D'AÉRONEF

(30) Priority: 23.04.2021 IT 202100010319
(43) Date of publication of application: 23.08.2023
(73) Proprietor: Leonardo S.p.A., 00195 Roma (IT)
(72) Inventor: DI MARIA, Franco Alfio, 10088 Volpiano (Torino) (IT)
(74) Representative: Fioravanti, Corrado
(86) International application number: PCT/IB2022/053717
(87) International publication number: WO 2022/224177

(56) References cited:
- US-A- 4 286 834
- US-A1- 2008 232 924
- US-A1- 2019 257 349
- US-B2- 7 748 661

## Description

### Technical field

The present invention pertains to the field of aircraft construction and relates to an assembly for removably mounting an underwing pylon to a rib of an aircraft wing.

### Background art

In aviation, the term "underwing pylon" (or wing pylon) refers to a rigid, structural fairing element that is mounted by threaded couplings to the underside of a wing and is used to support an underwing load such as engine nacelles, wing tanks, or armaments. The type of load depends on the flight mission to be performed by the aircraft and requires a dedicated underwing pylon to be mounted. When the flight mission is changed, the underwing load is replaced and therefore the removal of the underwing pylon is also required.

A problem that is felt, caused by the removal of the underwing pylons, which in many cases causes damage to the primary structure of the wing. The damage does not allow for the pylon to be remounted, except after a significant repair; this may involve the problem that, in the case of repeated damage to a part that has already been repaired, the possibility of carrying out further repairs will probably be affected, with the risk that the support system of the pylon will be forever jeopardized.

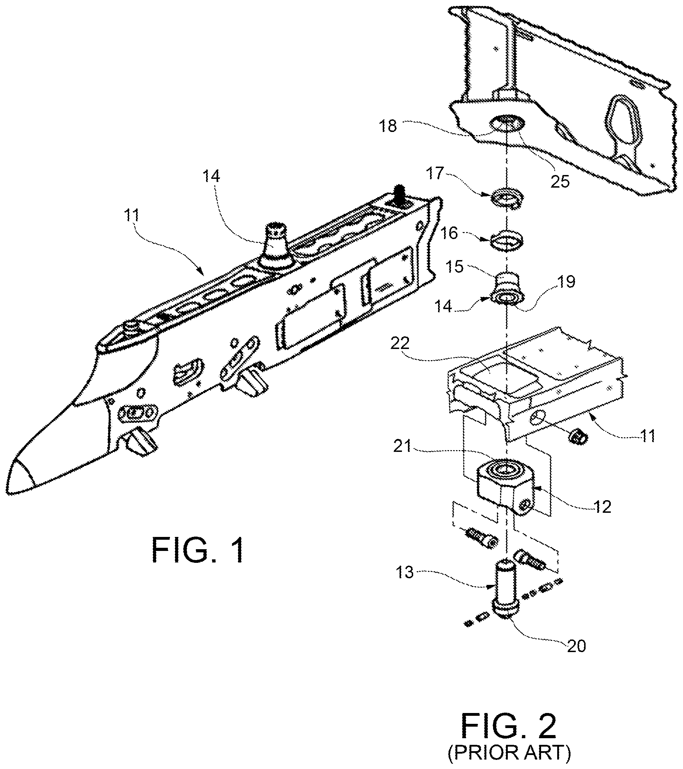

For a better understanding of the state of the art and its inherent problems, reference is made to Fig. 1 and 2 of the attached drawings. An inner rib 10 of the wing of an aircraft has a conical seat 18 adapted on the bottom to receive and retain a removable underwing pylon assembly 11. The mounting assembly comprises: a prismatic body 12 having a central hole 21, through which a threaded pin 13, also known as a "yaw spigot," is passed; a threaded retaining element 14 having a conical outer surface 15; a conical bushing 16; and a top nut 17. In the mounted condition, the conical bushing is forcibly locked by radial interference between the lower seat 18 of the rib and the conical surface 15 of the threaded retaining element 14. The top nut 17 is screwed onto an outer threaded surface of the threaded retaining element 14; said element has a threaded inner hole 19 into which the threaded pin 13 is screwed and a wrench formed in its flanged base to allow screwing. The threaded pin 13 has a lower head 20 to which the tightening and unscrewing torques apply. The prismatic body 12 is received in a correspondingly shaped prismatic through seat 22 formed through the body of the pylon 11. The threaded pin 13 is coupled to the retaining element 14 with a prescribed tightening torque to prevent accidental unscrewing from the wing.

To remove the pylon, an unscrewing torque must be applied to the threaded pin 13 that is in some cases greater than the technical installation specification. Excessive unscrewing torques may also involve an unwanted rotation of the top nut and conical bushing 16 together with the threaded retaining element 14, with damage resulting to the seat 18 made in the rib; said rib, in fact, is made of a metal material (aluminum or aluminum alloy) that is more deformable than the steel from which the nut, conical bushing, and threaded retaining element are made. Damage of this kind to a structural part of the wing requires extensive repairs to restore the lost mechanical properties.

US7748661B2 discloses an assembly comprising a bracket for carrying stores which is fastened to the structural skeleton of a wing via a fastener.

### Summary of the invention

Thus, it is an object of the present invention to overcome the above-described drawback. The invention proposes to implement an anti-rotation configuration for disassembling an underwing pylon, primarily addressing the problem of avoiding damage to the structure of the wing while the pylon is disassembled.

The aforesaid and other objects and advantages are achieved according to this invention by a mounting assembly having the features set out in the appended independent claim 1. Advantageous embodiments are specified in the dependent claims, the content of which is to be understood as an integral part of the description that follows.

In summary, the assembly for mounting an underwing pylon to a rib of the wing comprises an anti-rotation device that transfers torsional stresses, which may occur while disassembling the underwing pylon, to said pylon and not to the structure of the wing.

### Brief description of the drawings

The features of some preferred embodiments of an anti-rotation configuration according to the invention will now be described. Reference is made to the accompanying drawings, wherein:
Fig. 1 is a partial perspective view of an underwing pylon;
Fig. 2 is an exploded perspective view of the elements for mounting an underwing pylon to a rib according to the prior art;
Fig. 3 is an exploded perspective view of elements of an assembly for mounting an underwing pylon to a rib according to an embodiment of the present invention;
Fig. 4 is an exploded perspective view of the components of an anti-rotation device that is part of the assembly in Fig. 3;
Fig. 5 is a plan view from above of an underwing pylon with part of the anti-rotation device at an intermediate stage before mounting to a rib of a wing;

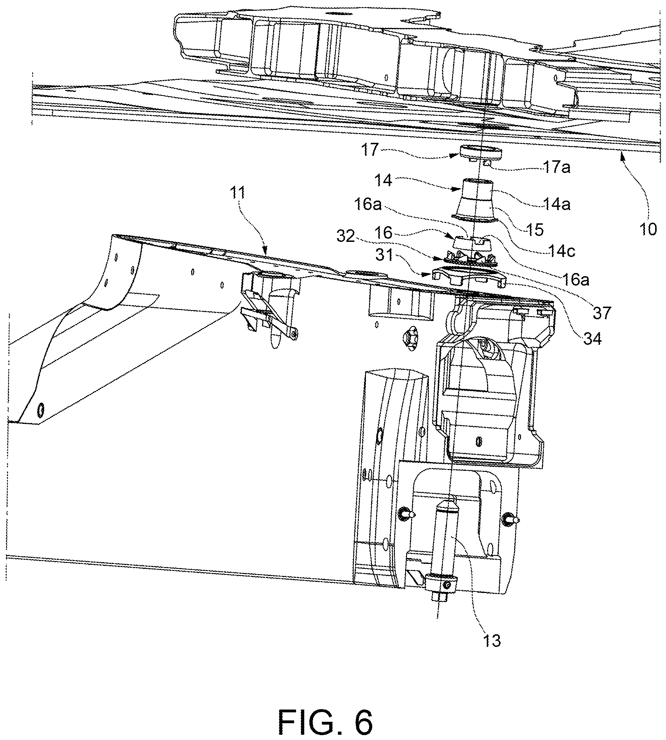

Fig. 6 is an exploded perspective view of the underwing pylon, the anti-rotation device components, and the rib of a wing;

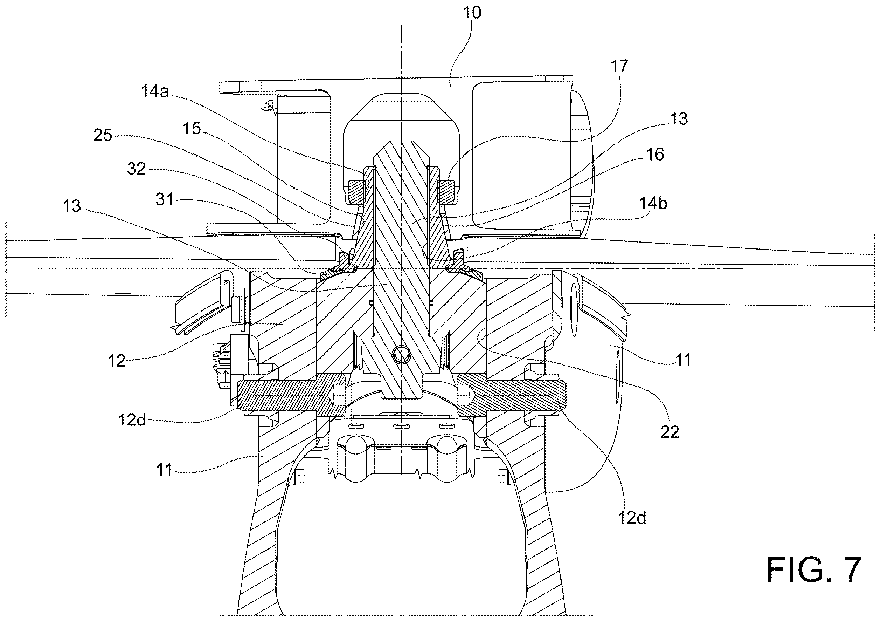

Fig. 7 is a partial vertical section view of the underwing pylon mounted to the rib of a wing;

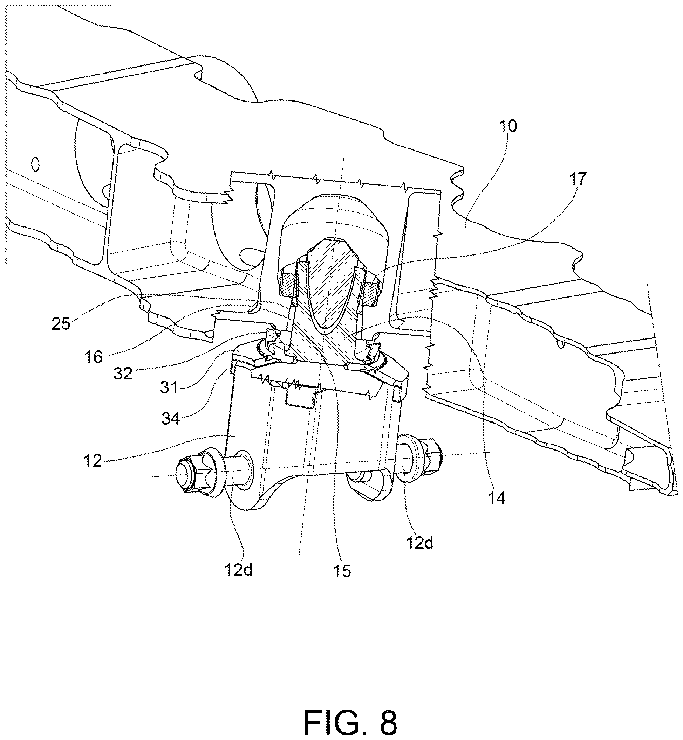

Fig. 8 is a partial cutaway perspective view of the anti-rotation device mounted to a wing; and
Fig. 9 is an exploded perspective view in an enlarged scale of some of the elements of the assembly in Fig. 3.

### Detailed description

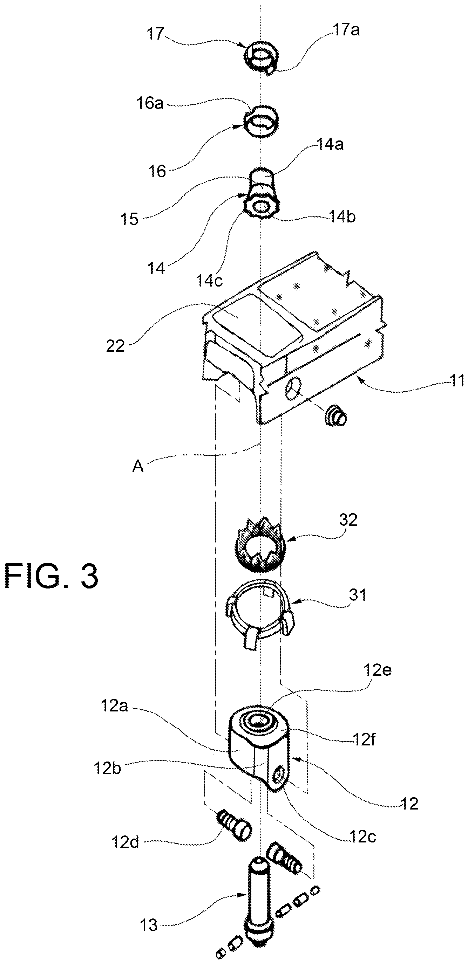

Referring to Fig. 3, there is illustrated an assembly for removably mounting an underwing pylon of the type shown in Fig. 1 to a rib of a wing designated at 10 in Fig. 2 .

The structural features of the pylon 11 and the rib 10 are known in the art and need not be described in detail here. It will suffice here to mention that the rib 10 has a lower surface on which there is a plurality of cavities 18, each having a respective conical surface 25 tapering upward, and that the pylon has a plurality of substantially prismatic seats 22 in the form of vertical through openings.

According to an embodiment, an assembly for removably mounting the pylon to the rib comprises: a prismatic body 12, a vertical threaded pin 13, a threaded retaining element 14, a conical bushing 16, a top nut 17, and an anti-rotation device comprising a first lower annular anti-rotation element 31, and a second upper annular anti-rotation element 32.

In this context, terms and expressions indicating positions and orientations such as "vertical," "axial," "longitudinal," "radial," and "tangential" are intended to refer to the vertical direction indicated by the axis A along which the threaded pin 13 extends.

The prismatic body 12, known *per se,* has an overall square or rectangular horizontal cross-sectional shape with beveled vertices with four vertical lateral faces 12a joined in pairs by intermediate chamfered faces 12b, each forming an obtuse angle with both lateral faces 12a contiguous thereto. In the mounted condition, the prismatic body 12 is accommodated with slight play in one of the prismatic seats 22 formed in the pylon and is attachable to the pylon body. Typically, the prismatic body 12 may have horizontal holes 12c for connecting to the pylon body by means of bolts 12d.

The prismatic body 12 has a top surface 12f and a central hole 12e through which a traditional threaded pin 13, also known as a "yaw spigot," is passed.

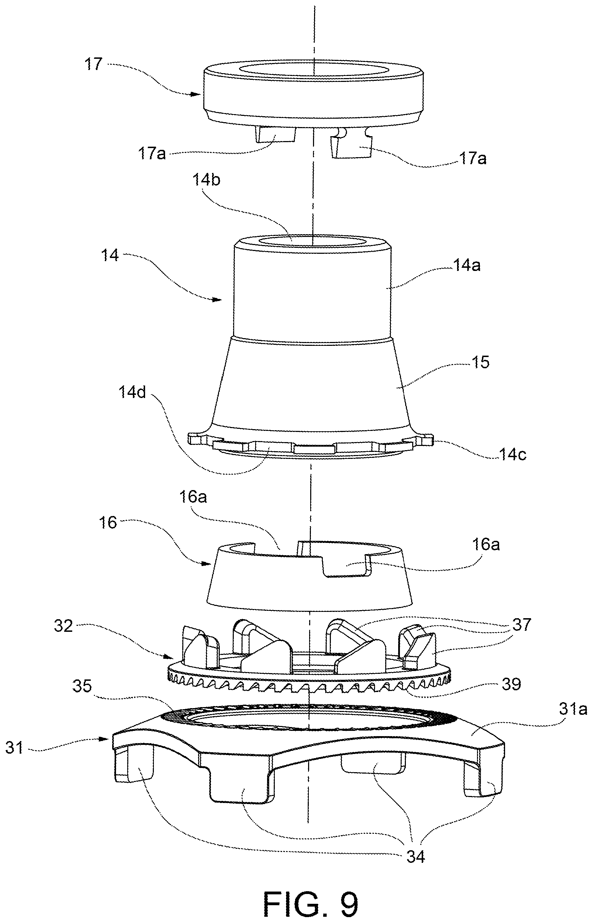

The threaded retaining element 14 has an upwardly tapered outer conical surface 15, a threaded upper and outer cylindrical surface 14a, a threaded inner cylindrical cavity 14b, and a lower flange 14c with a plurality of circumferentially spaced recesses 14d (Fig. 9). The threaded inner cylindrical cavity 14b serves to receive the threaded pin 13, while the outer cylindrical threaded surface 14a is used to screw in the top nut 17. The recesses 14d are preferably made as peripheral recesses elongated in tangential directions and equidistant from each other. According to a preferred embodiment, the recesses 14d open in radially outer directions along the periphery of the flange 14c.

The conical bushing 16 is fitted to the outer conical surface 15 of the threaded retaining element and may have a recess 16a in which a retaining protrusion 17a of the nut 17 may be engaged for rotationally retaining the bushing, in the mounted condition, with respect to the retaining element 14.

The two lower annular anti-rotation elements 31 and upper annular anti-rotation elements 32 serve to transfer stresses and tensions resulting from the application of unscrewing torques to the pylon 11 from the retaining element 14, as explained below.

The first annular anti-rotation element, denoted with 31, is adapted to cooperate with the prismatic body 12 and with the second annular anti-rotation element 32. The first annular anti-rotation element 31 has a central circular hole 33 and a plurality of peripheral fixing tabs 34. The fixing tabs 34 are oriented in substantially vertical planes and are angularly spaced apart and locked immovably on the prismatic body 12; in particular, the fixing tabs 34 grip and tighten the prismatic body 12 by acting against various chamfered vertical lateral faces 12b thereof. The first annular anti-rotation element 31 has an upper surface 31a having a first plurality of upward-facing engagement portions 35 distributed around the first annular anti-rotation element according to a given first step. Preferably, the engagement portions 35 are in the form of recesses 35 open towards the top and distributed around the circular hole 33.

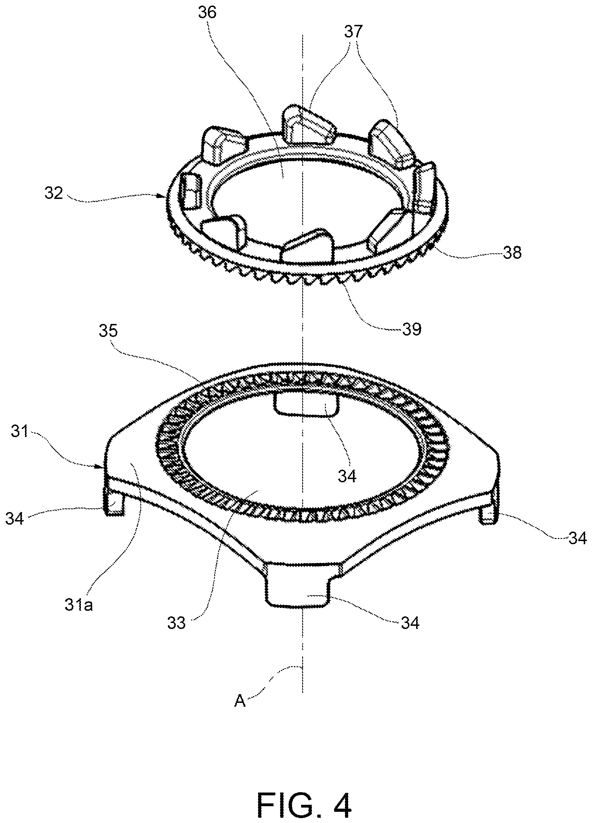

In the embodiment shown in Fig. 4, the upper surface 31a of the first annular anti-rotation element 31 is provided with a plate-like portion having a partially hemispherical shape, corresponding to the top surface 12f of the prismatic body 12.

The second annular anti-rotation element 32, is adapted to cooperate with the first annular anti-rotation element 31 and the retaining element 14. The second annular anti-rotation element 32 has a central hole 36, an upper crown of upper locking teeth 37 arranged about the hole 36, and a second plurality of downward-facing engagement portions 38, in this example, in the form of a lower crown of lower locking teeth 38 arranged about the hole 36. The lower locking teeth 38 are configured to engage with the recesses 35 on the first annular anti-rotation element 31 to make the two annular elements rotationally integral.

The upper locking teeth 37 have a pitch and size corresponding to the pitch and size of the recesses 14d of the flange of the retaining element 14 so as to engage respective recesses 14d to prevent the relevant rotations between the second annular anti-rotation element 32 and the retaining element 14. To facilitate the insertion into the recesses 14d, the upper locking teeth are preferably shaped like saw teeth with inclined surfaces.

The lower locking teeth 38 of the second annular anti-rotation element 32 have a pitch and size corresponding to the pitch and size of the recesses 35 provided by the first annular anti-rotation element 31.

The pitch of the lower locking teeth 38 of the second annular anti-rotation element 32 and the recesses 35 of the first annular anti-rotation element 31 is advantageously smaller than the pitch of the upper locking teeth 37 of the second annular anti-rotation element and the recesses 14d of the engagement element flange 14 so that the mutual angular position between the first and second annular anti-rotation elements may be finely and precisely adjusted.

Preferably, to make mounting easier, the lower locking teeth 38 of the second annular anti-rotation element 32 have lower surfaces 39 inclined in the same circumferential direction.

According to a particularly advantageous embodiment, the inclined lower surfaces 39 of the lower locking teeth 38 of the second annular anti-rotation elements 32 are inclined in directions parallel to the inclination directions of the upper locking teeth 37, which are shaped like saw teeth and are located at corresponding circumferential positions.

For mounting the underwing pylon to the rib, the first annular anti-rotation element is attached to the prismatic body 12. The fixing tabs 34 are tightened against respective lateral faces of the prismatic body 12, preferably against the intermediate chamfered faces 12b.

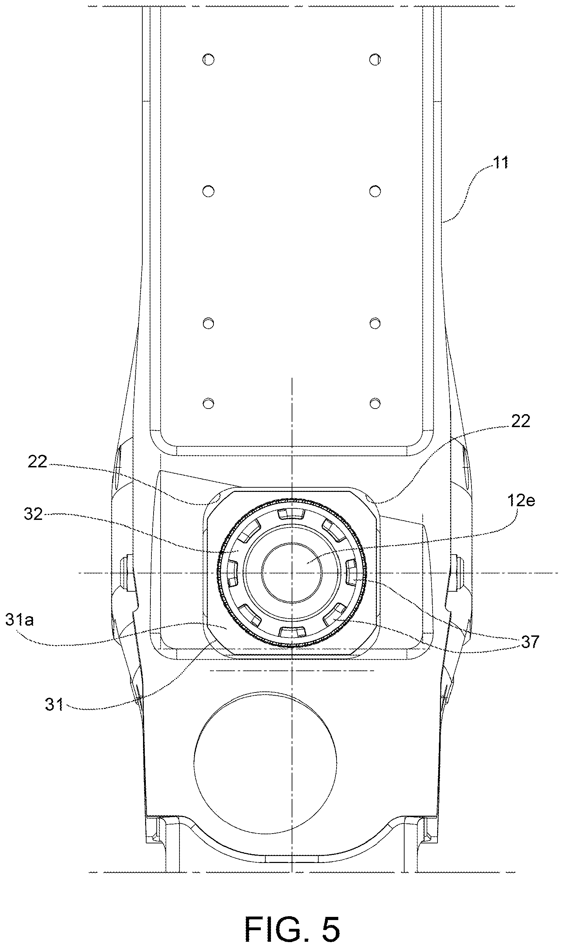

The prismatic body with the annular anti-rotation elements is inserted into the prismatic seat 22 of the pylon (Fig. 5).

The conical bushing 16 is fitted onto the conical surface 15 of the retaining element 14, and the retaining element 14 is inserted into the cavity 18, bringing the conical bushing 16 against the conical surface 25 of the cavity 18.

The nut 17 is screwed onto the outer cylindrical threaded surface 14a of the retaining element 14. The pylon is then lifted by bringing it against the lower surface of the rib; the second annular anti-rotation element 32 is coupled to the retaining element 14, inserting and engaging the upper locking teeth 37 in the recesses 14d formed in the flange 14c. At this stage, the relevant angular position between the first and second annular anti-rotation elements may be adjusted. Subsequently, the threaded pin 13 is screwed into the threaded inner cylindrical cavity 14b of the retaining element 14e with a prescribed torque, tightening the retaining element 14 and the conical bushing 16 against the conical surface of the rib as a packet.

During disassembling, an unscrewing torque is applied to the pin 13 to unscrew it from the retaining element 14. The torsion reactions of the retaining element 14 are transferred via the anti-rotation elements 31 and 32 to the prismatic body 12 and from there to the inner walls of the prismatic seat 22 of the pylon. The rotation of the retaining element 14 and the top nut 17 is therefore not counteracted by the aluminum alloy rib, which is therefore not damaged.

As may be appreciated, the torsional unscrewing stresses are no longer transmitted to the rib of the wing, but are deflected onto the steel body of the pylon.

The embodiments comprising, as in the illustrated example, two associated anti-rotation elements, are preferable and advantageous, as they allow the retaining element 14 to be angularly locked in whichever angular position it is in with respect to the sub-wing pylon. Alternative embodiments (not illustrated) may include a single annular anti-rotation element having fixing tabs similar to those illustrated with 34 to lock angularly to the prismatic body, and other means for the rotationally lockable engagement to the retaining element 14.

Various aspects and embodiments of the invention have been described.

Moreover, the invention is not limited to the embodiments described, but may be varied within the scope defined by the appended claims.

## Claims

1. An assembly for removably mounting an underwing pylon (11) to a rib (10) of an aircraft wing, the assembly comprising:
a rigid prismatic body (12) connectable to the underwing pylon (11) and insertable in a corresponding prismatic cavity (22) formed in the underwing pylon (11);
a vertical threaded pin (13) inserted through a vertical through hole (12e) of the prismatic body (12);
a threaded retaining element (14) having an upwardly tapered outer conical surface (15), a threaded upper and outer cylindrical surface (14a), a threaded inner cylindrical cavity (14b) adapted to receive the vertical threaded pin (13), and a lower flange (14c);
a conical bushing (16) arranged on the outer conical surface (15) of the threaded retaining element (14); and
a nut (17) threadedly coupled to the threaded upper and outer cylindrical surface (14a);
wherein the assembly further comprises an anti-rotation device (31, 32) for rotationally locking the threaded retaining element (14) to the prismatic body (12) with respect to a vertical axis (A).

2. An assembly according to claim 1, **characterized in that** the anti-rotation device comprises
at least one annular anti-rotation element (31, 32) arranged on a top surface (12f) of the prismatic body (12),
a first plurality of locking portions (34) rotationally integral with said at least one annular anti-rotation element and acting against respective resisting surfaces (12b) of the prismatic body (12), and
a second plurality of locking portions (37) rotationally integral with said at least one annular anti-rotation element and engaged with corresponding anti-rotation portions (14d) provided by the lower flange (14c) of the threaded retaining element (14).

3. An assembly according to claim 2, **characterized in that** the anti-rotation device comprises two rotationally integral annular anti-rotation elements (31, 32):
a first annular anti-rotation element (31) arranged on the top surface (12f) of the prismatic body (12) and having said first plurality of locking portions (34) and a first plurality of upwardly facing engagement portions (35) distributed around the first annular anti-rotation element (31) according to a first given pitch; and
a second annular anti-rotation element (32) arranged on the first annular anti-rotation element (31) and having said second plurality of locking portions (37) and a second plurality of downwardly facing engagement portions (38) distributed around the second annular anti-rotation element (32) according to said first pitch and engaged with said first plurality of upwardly facing engagement portions (35) of the first annular anti-rotation element (31),
wherein the second plurality of locking portions (37) is distributed about the second annular anti-rotation element (32) according to a second pitch greater than said first pitch.

4. An assembly according to claim 2 or 3, **characterized in that** the first plurality of locking portions (34) comprises fixing tabs (34) acting against respective ones of said resisting surfaces of the prismatic body element (12), the resisting surfaces being shaped as vertical lateral faces (12b) of the prismatic element (12).

5. An assembly according to claim 4, **characterized in that** the prismatic body (12) has a plurality of vertical lateral faces (12a) joined in pairs by intermediate chamfered lateral faces (12b) each forming an obtuse angle with both the vertical lateral faces (12a) contiguous thereto, and that the locking portions (34) act against said intermediate chamfered lateral faces (12b).

6. An assembly according to any one of claims 2 to 4, **characterized in that** the anti-rotation portions (14d) provided by the lower flange (14c) comprise peripheral recesses (14d) elongated in tangential directions and equally spaced from one another about the lower flange (14c).

7. An assembly according to claim 6, **characterized in that** the peripheral recesses (14d) are open in radially outer directions along the periphery of the lower flange (14c).

8. An assembly according to claim 6 or 7, **characterized in that** the second plurality of locking portions (37) of the second annular anti-rotation element (32) comprises upper locking teeth (37) engaged in the peripheral recesses (14d),
wherein the upper locking teeth (37) are shaped like saw teeth with upper surfaces inclined in the same circumferential direction,
wherein the second plurality of downwardly facing engagement portions (38) of the second annular anti-rotation element comprises lower locking teeth (38) in the form of saw teeth with lower surfaces (39) inclined in a same circumferential direction, and wherein
the lower inclined surfaces (39) of the lower locking teeth (38) of the second annular anti-rotation element (32) are inclined in directions substantially parallel to the inclination directions of the upper locking teeth (37) located in corresponding circumferential positions.

9. An assembly according to claim 3, **characterized in that** the first annular anti-rotation element (31) has an upper surface provided by a plate portion having a partially hemispherical shape, curved at least partially corresponding to the top surface (12f) of the prismatic body (12).

10. An aircraft with two wings, each wing having a plurality of ribs (10), at least one rib having at least one underwing pylon (11) which is removably mounted to the at least one rib of the plurality of ribs by means of an assembly according to any one of the preceding claims.

## Patentansprüche

1. Anordnung zur abnehmbaren Montage eines Unterflügelpylons (11) an einer Rippe (10) eines Flugzeugflügels, wobei die Anordnung umfasst:
einen starren prismatischen Körper (12), der mit dem Unterflügelpylon (11) verbindbar und in einen in dem Unterflügelpylon (11) ausgebildeten entsprechenden prismatischen Hohlraum (22) einführbar ist;
einen vertikalen mit Gewinde versehenen Stift (13), der durch ein vertikales Durchgangsloch (12e) des prismatischen Körpers (12) eingeführt ist;
ein mit Gewinde versehenes Halteelement (14) mit einer nach oben verjüngten äußeren konischen Fläche bzw. Oberfläche (15), einer mit Gewinde versehenen oberen und äußeren zylindrischen Fläche bzw. Oberfläche (14a), einem mit Gewinde versehenen inneren zylindrischen Hohlraum (14b), der angepasst ist, um den vertikalen mit Gewinde versehenen Stift (13) aufzunehmen, und einem unteren Flansch (14c);
eine konische Buchse (16), die auf der äußeren konischen Fläche (15) des mit Gewinde versehenen Halteelements (14) angeordnet ist; und
eine Mutter (17), die mit der mit Gewinde versehenen oberen und äußeren zylindrischen Fläche (14a) gewindegekoppelt ist;
wobei die Anordnung ferner eine Verdrehsicherungsvorrichtung (31, 32) zur Drehverriegelung des mit Gewinde versehenen Halteelements (14) an dem prismatischen Körper (12) in Bezug auf eine vertikale Achse (A) umfasst.

2. Anordnung nach Anspruch 1, **dadurch gekennzeichnet, dass** die Verdrehsicherungsvorrichtung umfasst
mindestens ein ringförmiges Verdrehsicherungselement (31, 32), das auf einer oberen Fläche bzw. Oberfläche (12f) des prismatischen Körpers (12) angeordnet ist,
eine erste Mehrzahl von Verriegelungsabschnitten (34), die drehfest mit dem mindestens einen ringförmigen Verdrehsicherungselement verbunden sind und gegen jeweilige Widerstandsflächen bzw. -oberflächen (12b) des prismatischen Körpers (12) wirken, und
eine zweite Mehrzahl von Verriegelungsabschnitten (37), die drehfest mit dem mindestens einen ringförmigen Verdrehsicherungselement verbunden sind und mit entsprechenden Verdrehsicherungsabschnitten (14d) in Eingriff stehen, die durch den unteren Flansch (14c) des mit Gewinde versehenen Halteelements (14) bereitgestellt sind.

3. Anordnung nach Anspruch 2, **dadurch gekennzeichnet, dass** die Verdrehsicherungsvorrichtung zwei drehfest verbundene ringförmige Verdrehsicherungselemente (31, 32) umfasst:
ein erstes ringförmiges Verdrehsicherungselement (31), das auf der oberen Fläche (12f) des prismatischen Körpers (12) angeordnet ist und die erste Mehrzahl von Verriegelungsabschnitten (34) und eine erste Mehrzahl von nach oben weisenden Eingriffsabschnitten (35) aufweist, die um das erste ringförmige Verdrehsicherungselement (31) herum gemäß einem ersten vorgegebenen Abstand verteilt sind; und
ein zweites ringförmiges Verdrehsicherungselement (32), das an dem ersten ringförmigen Verdrehsicherungselement (31) angeordnet ist und die zweite Mehrzahl von Verriegelungsabschnitten (37) und eine zweite Mehrzahl von nach unten weisenden Eingriffsabschnitten (38) aufweist, die um das zweite ringförmige Verdrehsicherungselement (32) herum gemäß dem ersten Abstand verteilt sind und mit der ersten Mehrzahl von nach oben weisenden Eingriffsabschnitten (35) des ersten ringförmigen Verdrehsicherungselements (31) in Eingriff stehen,
wobei die zweite Mehrzahl von Verriegelungsabschnitten (37) um das zweite ringförmige Verdrehsicherungselement (32) herum gemäß einem zweiten Abstand, der größer als der erste Abstand ist, verteilt ist.

4. Anordnung nach Anspruch 2 oder 3, **dadurch gekennzeichnet, dass** die erste Mehrzahl von Verriegelungsabschnitten (34) Befestigungslaschen (34) umfasst, die gegen jeweilige der Widerstandsflächen des prismatischen Körperelements (12) wirken, wobei die Widerstandsflächen als vertikale Seitenflächen (12b) des prismatischen Elements (12) geformt sind.

5. Anordnung nach Anspruch 4, **dadurch gekennzeichnet, dass** der prismatische Körper (12) eine Mehrzahl von vertikalen Seitenflächen (12a) aufweist, die paarweise durch zwischenliegende abgeschrägte Seitenflächen (12b) verbunden sind, die jeweils einen stumpfen Winkel mit den beiden daran angrenzenden vertikalen Seitenflächen (12a) bilden, und dass die Verriegelungsabschnitte (34) gegen die zwischenliegenden abgeschrägten Seitenflächen (12b) wirken.

6. Anordnung nach einem der Ansprüche 2 bis 4, **dadurch gekennzeichnet, dass** die durch den unteren Flansch (14c) bereitgestellten Verdrehsicherungsabschnitte (14d) Umfangsaussparungen (14d) umfassen, die in tangentialen Richtungen länglich sind und um den unteren Flansch (14c) herum gleichmäßig voneinander beabstandet sind.

7. Anordnung nach Anspruch 6, **dadurch gekennzeichnet, dass** die Umfangsaussparungen (14d) in radial äußeren Richtungen entlang des Umfangs des unteren Flanschs (14c) offen sind.

8. Anordnung nach Anspruch 6 oder 7, **dadurch gekennzeichnet, dass** die zweite Mehrzahl von Verriegelungsabschnitten (37) des zweiten ringförmigen Verdrehsicherungselements (32) obere Verriegelungszähne (37) umfasst, die in die Umfangsaussparungen (14d) eingreifen,
wobei die oberen Verriegelungszähne (37) wie Sägezähne geformt sind, deren obere Flächen bzw. Oberflächen in derselben Umfangsrichtung geneigt sind,
wobei die zweite Mehrzahl von nach unten weisenden Eingriffsabschnitten (38) des zweiten ringförmigen Verdrehsicherungselements untere Verriegelungszähne (38) in Form von Sägezähnen umfasst, deren untere Flächen bzw. Oberflächen (39) in einer selben Umfangsrichtung geneigt sind, und wobei
die unteren geneigten Flächen (39) der unteren Verriegelungszähne (38) des zweiten ringförmigen Verdrehsicherungselements (32) in Richtungen geneigt sind, die im Wesentlichen parallel zu den Neigungsrichtungen der oberen Verriegelungszähne (37) verlaufen, die sich in entsprechenden Umfangspositionen befinden.

9. Anordnung nach Anspruch 3, **dadurch gekennzeichnet, dass** das erste ringförmige Verdrehsicherungselement (31) eine obere Fläche bzw. Oberfläche aufweist, die durch einen Plattenabschnitt mit einer teilweise halbkugelförmigen Form bereitgestellt ist, die zumindest teilweise entsprechend der oberen Fläche (12f) des prismatischen Körpers (12) gekrümmt ist.

10. Flugzeug mit zwei Flügeln, wobei jeder Flügel eine Mehrzahl von Rippen (10) aufweist, wobei mindestens eine Rippe mindestens einen Unterflügelpylon (11) aufweist, der an der mindestens einen Rippe der Mehrzahl von Rippen mittels einer Anordnung nach einem der vorhergehenden Ansprüche abnehmbar montiert ist.

## Revendications

1. Ensemble servant à monter de manière amovible un mât d'intrados (11) sur une nervure (10) d'une aile d'aéronef, l'ensemble comprenant :
un corps prismatique rigide (12) pouvant être relié au mât d'intrados (11) et pouvant être inséré dans une cavité prismatique (22) correspondante formée dans le mât d'intrados (11) ;
une tige filetée verticale (13) insérée à travers un trou traversant vertical (12e) du corps prismatique (12) ;
un élément de retenue fileté (14) comportant une surface conique extérieure effilée vers le haut (15), une surface cylindrique supérieure et extérieure filetée (14a), une cavité cylindrique intérieure filetée (14b) apte à recevoir la tige filetée verticale (13), et une bride inférieure (14c) ;
une douille conique (16) agencée sur la surface conique extérieure (15) de l'élément de retenue fileté (14) ; et
un écrou (17) couplé par filetage à la surface cylindrique supérieure et extérieure filetée (14a) ;
dans lequel l'ensemble comprend en outre un dispositif anti-rotation (31, 32) pour verrouiller en rotation l'élément de retenue fileté (14) sur le corps prismatique (12) par rapport à un axe vertical (A).

2. Ensemble selon la revendication 1, **caractérisé en ce que** le dispositif anti-rotation comprend
au moins un élément anti-rotation annulaire (31, 32) agencé sur une surface supérieure (12f) du corps prismatique (12),
une première pluralité de parties de verrouillage (34) solidaires en rotation dudit au moins un élément anti-rotation annulaire et agissant contre des surfaces résistantes (12b) respectives du corps prismatique (12), et
une seconde pluralité de parties de verrouillage (37) solidaires en rotation dudit au moins un élément anti-rotation annulaire et mises en prise avec des parties anti-rotation (14d) correspondantes fournies par la bride inférieure (14c) de l'élément de retenue fileté (14).

3. Ensemble selon la revendication 2, **caractérisé en ce que** le dispositif anti-rotation comprend deux éléments anti-rotation annulaires solidaires en rotation (31, 32) :
un premier élément anti-rotation annulaire (31) agencé sur la surface supérieure (12f) du corps prismatique (12) et ayant ladite première pluralité de parties de verrouillage (34) et une première pluralité de parties de mise en prise faisant face vers le haut (35) réparties autour du premier élément anti-rotation annulaire (31) selon un premier pas donné ; et
un second élément anti-rotation annulaire (32) agencé sur le premier élément anti-rotation annulaire (31) et ayant ladite seconde pluralité de parties de verrouillage (37) et une seconde pluralité de parties de mise en prise faisant face vers le bas (38) réparties autour du second élément anti-rotation annulaire (32) selon ledit premier pas et mises en prise avec ladite première pluralité de parties de mise en prise faisant face vers le haut (35) du premier élément anti-rotation annulaire (31),
dans lequel la seconde pluralité de parties de verrouillage (37) est répartie autour du second élément anti-rotation annulaire (32) selon un second pas supérieur audit premier pas.

4. Ensemble selon la revendication 2 ou 3, **caractérisé en ce que** la première pluralité de parties de verrouillage (34) comprend des pattes de fixation (34) agissant contre des surfaces respectives parmi lesdites surfaces résistantes de l'élément de corps prismatique (12), les surfaces résistantes étant façonnées sous la forme de faces latérales verticales (12b) de l'élément prismatique (12).

5. Ensemble selon la revendication 4, **caractérisé en ce que** le corps prismatique (12) comporte une pluralité de faces latérales verticales (12a) jointes en paires par des faces latérales biseautées intermédiaires (12b) formant chacune un angle obtus avec les deux faces latérales verticales (12a) qui lui sont contiguës, et **en ce que** les parties de verrouillage (34) agissent contre lesdites faces latérales biseautées intermédiaires (12b).

6. Ensemble selon l'une quelconque des revendications 2 à 4, **caractérisé en ce que** les parties anti-rotation (14d) fournies par la bride inférieure (14c) comprennent des évidements périphériques (14d) allongés dans des directions tangentielles et équidistants les uns des autres autour de la bride inférieure (14c).

7. Ensemble selon la revendication 6, **caractérisé en ce que** les évidements périphériques (14d) sont ouverts dans des directions radialement extérieures le long de la périphérie de la bride inférieure (14c).

8. Ensemble selon la revendication 6 ou 7, **caractérisé en ce que** la seconde pluralité de parties de verrouillage (37) du second élément anti-rotation annulaire (32) comprend des dents de verrouillage supérieures (37) mises en prise dans les évidements périphériques (14d),
dans lequel les dents de verrouillage supérieures (37) sont façonnées en forme de dents de scie avec des surfaces supérieures inclinées dans la même direction circonférentielle,
dans lequel la seconde pluralité de parties de mise en prise faisant face vers le bas (38) du second élément anti-rotation annulaire comprend des dents de verrouillage inférieures (38) en forme de dents de scie avec des surfaces inférieures (39) inclinées dans une même direction circonférentielle, et dans lequel
les surfaces inclinées inférieures (39) des dents de verrouillage inférieures (38) du second élément anti-rotation annulaire (32) sont inclinées dans des directions sensiblement parallèles aux directions d'inclinaison des dents de verrouillage supérieures (37) situées à des positions circonférentielles correspondantes.

9. Ensemble selon la revendication 3, **caractérisé en ce que** le premier élément anti-rotation annulaire (31) comporte une surface supérieure fournie par une partie de plaque présentant une forme partiellement hémisphérique, incurvée correspondant au moins partiellement à la surface supérieure (12f) du corps prismatique (12).

10. Aéronef avec deux ailes, chaque aile comportant une pluralité de nervures (10), au moins une nervure comportant au moins un mât d'intrados (11) qui est monté de manière amovible sur l'au moins une nervure parmi la pluralité de nervures à l'aide d'un ensemble selon l'une quelconque des revendications précédentes.
